# EUROPÄISCHE PATENTANMELDUNG

(11) **EP 1 788 065 A1**
(43) Veröffentlichungstag der Anmeldung: **23.05.2007**
(21) Anmeldenummer: 05025201.4
(22) Anmeldetag: 18.11.2005
(51) Int. Cl.: C10L 1/02, C10L 5/44, C11B 3/10, B01D 15/00, B01J 20/24, B01J 20/12

(54) **Verfahren und Anlage zum Reinigen von Biodiesel**

(71) Anmelder: Biodiesel Engineering Limited, Naousis 1 Karapatakis Building P. C. 6018 Larnaca (CY)
(72) Erfinder: Moser, Alfred, 2380 Perchtoldsdorf (AT)
(74) Vertreter: Hehenberger, Reinhard

(57) **Zusammenfassung**

Zum Entfernen des bei der Herstellung von Biodiesel anfallenden Glyzerin sowie Katalysatorresten, wie Kaliseifen, wird der ungereinigte Biodiesel mit zellulosehältigem Material unter kontinuierlichem und/oder diskontinuierlichem Mischen in Kontakt gebracht.

Eine Anlage zum Durchführen dieses Verfahrens weist einen Rühr- und Absetzbehälter (1) mit einer Leitung (4,5) zum Zuführen von gereinigtem Biodiesel in den Rühr- und Absetzbehälter (1) sowie einer Fördereinrichtung (6) zum Zuführen von zellulosehältigem Material in den Rühr- und Absetzbehälter (1) auf. Im Rühr- und Absetzbehälter (1) ist ein Antrieb (51) für ein Rührwerk (50) angeordnet. Eine Leitung (16, 20) führt vom Rühr- und Absetzbehälter (1) zu wenigstens einem Ruhe- und Absetzbehälter (2, 3). Im Bereich des Bodens des Rühr- und Absetzbehälters (1) ist ein Ventil 13 angebracht, über welches Feststoffe aus dem Rühr- und Absetzbehälters (1) abgeführt werden können.

## Beschreibung

Die Erfindung betrifft ein Verfahren zum Reinigen von Biodiesel. Die Erfindung betrifft des Weiteren eine Anlage zum Durchführen dieses Verfahrens und Brennmaterialien, welche durch dieses Reinigungsverfahren als Feststoffe gewonnen werden.

Biodiesel ist ein Kraftstoff mit ähnlichen Eigenschaften wie Dieselkraftstoff, welcher jedoch unter anderem aus nachwachsenden Rohstoffen, wie Pflanzenöl gewonnen wird. Weiters kann Biodiesel aus Abfallstoffen der Speiseindustrie, wie Reste von Speiseölen gewonnen werden. Chemisch handelt es sich bei Biodiesel um Fettsäurmethylester, welcher aus Fetten und Ölen in einer katalytischen Umesterungsreaktion mit ca. 10%igem Methanol hergestellt wird. Als Katalysatoren eignen sich vor allem Kaliumhydroxid, Natriumhydroxid und Alkoholate. Bei der Umesterung werden bei Normaldruck und Temperaturen um 60°C die Esterbindungen der Triglyzeride des Pflanzenöls oder Speisefetts getrennt und die Fettsäuren dann mit Methanol verestert. Anschließend müssen das entstehende Glyzerin sowie die anfallenden Katalysatorreste, wie Kaliseifen, vom Biodiesel getrennt werden. Dabei ist es notwendig für das Entfernen der alkalischen, in Wasser gelösten Kaliseifen auch saure Zusatzstoffe, wie Phosphorsäure zu verwenden. Dadurch entsteht bei den Reinigungsverfahren umweltschädliches, saures Abwasser.

Hier will die Erfindung Abhilfe schaffen.

Erfindungsgemäß wird daher ein Reinigungsverfahren von Biodiesel vorgeschlagen, welches dadurch gekennzeichnet ist, dass Biodiesel mit zellulosehältigen Stoffen in Kontakt gebracht wird.

Vorzugsweise erfolgt dies durch kontinuierliches oder diskontinuierliches Mischen der Ausgangsstoffe. Zu den Ausgangsstoffen zählen neben ungereinigtem Biodiesel, zellulosehältige Stoffe, wie Holz, vorzugsweise Buchenholz. Um hier unterschiedliche Oberflächen des zellulosehältigen Materials bereitstellen zu können, kann dieses in Form von Spänen und/oder Staub in unterschiedlichen Teilchengrößen eingesetzt werden. Als Adsorptionshilfe während des Vermischens der Komponenten kann weiters Bleicherde zugesetzt werden.
Diese Aufgabe wird des Weiteren mit einer Vorrichtung mit den Merkmalen des Anspruches 16 gelöst.

Bevorzugte Ausführungsformen der Erfindung sind Gegenstand der Unteransprüche.

Weiter Merkmale und Vorteile der Erfindung ergeben sich aus der nachfolgenden Beschreibung eines bevorzugten Ausführungsbeispiels der Erfindung in Verbindung mit der angeschlossenen Zeichnung.

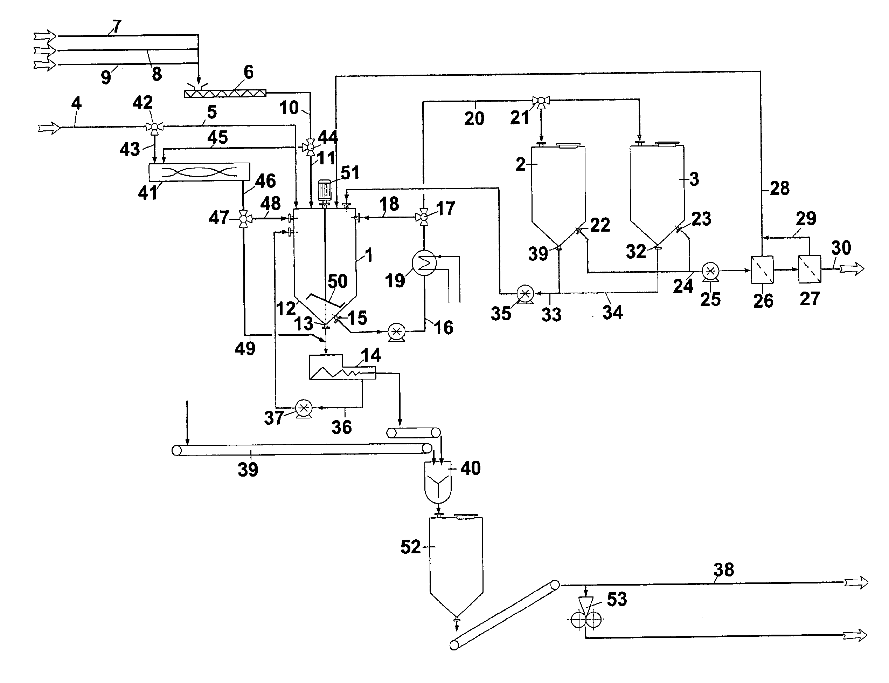

Die Zeichnung zeigt im Wesentlichen einen Rühr- und Absetzbehälter 1, zwei Ruhe- und Absetzbehälter 2, 3 sowie Vorrichtungen zum Verwerten der bei dem Verfahren gewonnenen Feststoffe. In einem ersten Verfahrensabschnitt wird ungereinigter Biodiesel über eine Leitung 4, 5 in den Rühr- und Absetzbehälter 1 eingebracht. Einer Fördereinrichtung 6 werden zellulosehältiges Material, wie Holzspäne 7 und Holzstaub 8, und bei Bedarf als Adsorptionshilfe Bleicherde 9 zugeführt und über eine Leitung 10, 11 in den Rühr- und Absetzbehälter 1 eingebracht.

Das Rührwerk 50 wird von einem Antrieb 51 in Intervallen betrieben, sodass während des Mischens eine innige Durchmischung des Biodiesels in ungereinigter Form und dem zellulosehältigen Material sowie der Bleicherde gewährleistet ist. Im Ruhestadium des Rührwerkes erfolgt bedingt durch den Zusatz der Bleicherde als Adsorptionsmittel ein relativ rasches Absinken der Feststoffe in Form des zumindest teilweise an der Bleicherde anhaftenden zellulosehältigen Materials. Die am Boden 12 des Rühr- und Absetzbehälters 1 abgesetzten Feststoffe werden über ein Ventil 13 aus dem Rühr- und Absetzbehälter 1 abgezogen und einer Presseinrichtung 14, z.B. einer Siebbandpresse, zugeführt. Der bereits vorgereinigte Biodiesel, welcher jedoch noch mit Schwebestoffen versetzt ist, wird über ein Ventil 15, das ebenfalls im Bereich des Bodens 12 angeordnet sein kann, und eine Leitung 16, in der eine Förderpumpe 17 angeordnet ist, abgezogen. Um die Gesamtverweildauer des Biodiesels zu verlängern kann der abgezogene Biodiesel ganz oder teilweise über ein Ventil 17 und eine Leitung 18 in den Rühr- und Absetzbehälter 1 zurückgeführt werden.

In der Leitung 16 kann des Weiteren eine Heizeinrichtung 19 angeordnet sein, um die Temperatur des Biodiesels im Rühr- und Absetzbehälter 1 auf einem vorgegebenen Temperaturniveau, das bevorzugt bei etwa 60°C liegt, zu halten. Bei dieser erhöhten Temperatur und weiterem Mischen werden die Adsorptionskräfte bzw. chemisch-physikalischen Kräfte zwischen dem Biodiesel und dem zellulosehältigen Material erhöht.

Der weitgehend von Schwebeteilen freie, gereinigte Biodiesel wird nach dem Ventil 17 über eine Leitung 20 und ein Ventil 21 abwechselnd den beiden Ruhe- und Absetzbehältern 2, 3 zugeführt, in welchen sich die restlichen Schwebeteilchen absetzen können. Der vollständig gereinigte Biodiesel wird über Ventile 22, 23 aus den Ruhe- und Absetzbehältern 2, 3 abgezogen und über eine Sammelleitung 24 und eine Pumpe zwei Filterstufen 26 und 27 zugeführt. Die feststoffhältigen Fraktionen der beiden Filterstufen 26, 27 werden über Leitungen 28, 29 zum Rühr- und Absetzbehälter 1 zurückgeführt. Der vollständig gereinigte Biodiesel wird über eine Leitung 30 zu einem Tank geleitet.

In den Ruhe- und Absetzbehältern 2, 3 setz sich am Boden die noch vorhandenen Schwebestoffe ab, die dann über Ventile 31, 32 und Leitungen 33, 34 und eine Pumpe 35 in den Rühr- und Absetzbehälter 1 zurückgeleitet werden. Der aus der Presseinrichtung 14 ausgepresste Biodiesel wird über eine Leitung 36 mit einer Pumpe 37 ebenfalls wieder dem Rühr- und Absetzbehälter 1 zugeführt.

Der weitgehend von Biodiesel befreite Feststoff aus der Presseinrichtung 14 wird einem Pufferbehälter 52 und anschließend entweder einer Press- bzw. Pelletiereinrichtung 53 zugeführt oder in Form einer weitgehend losen Schüttung über eine Fördereinrichtung 38 einem Lager, Silo oder dergleichen.

Es hat sich gezeigt, dass diese Feststoffe als Brennmaterialien bestens geeignet sind, da sie, wenn als zellulosehältiges Material z.B. Buchenholz verwendet wird, einen guten Heizwert aufweisen. Weiters sind diese CO,, neutral und somit umweltverträglich. Das erfindungsgemäße Verfahren ist insofern Kosten und Energie schonend, als das gereinigte bzw. vorgereinigte Biodieselfiltrat solange im Kreislauf gehalten wird, bis dieses weitgehend frei von Feststoffen bzw. Schwebepartikeln ist. Dies kann an verschiedenen Stellen des Verfahrens durch Probenahme nachvollzogen werden.

Bei Bedarf kann der Feststoff aus der Presseinrichtung 14 mit anderen brennbaren Stoffen gemischt und weiter verarbeitet werden. Die weiteren Stoffe können zum Beispiel Presskuchen z.B. aus Raps, Soja oder Sonnenblumen sein, die über eine Fördereinrichtung 39 zugeführt und einem Mischer 40 mit dem Feststoff gemischt werden. Holzabfälle können natürlich ebenso zugemischt werden.

Zusätzlich zum Rühr- und Absetzbehälter 1 kann noch eine Mischvorrichtung 41 vorgesehen sein die im Verfahrensablauf dem Rühr- und Absetzbehälter 1 vorgeschaltet ist. Die Mischvorrichtung 41 kann z.B. eine kontinuierlich oder diskontinuierlich arbeitende Misch- und Förderschnecke sein, der ungereinigter Biodiesel aus der Leitung 4 über ein Ventil 42 und eine Leitung 43 und das Gemisch aus zellulosehältigem Material und Bleicherde aus der Leitung 10 über ein Ventil 44 und eine Leitung 45 zugeführt wird. In dieser Mischvorrichtung 41 kann der Biodiesel bereits mit dem zellulosehältigen Material reagieren. Um die Reaktion zu verbessern kann die Mischvorrichtung 41 aufeinander folgende Abschnitte aufweisen, in denen abwechselnd gemischt und nicht gemischt sondern nur gefördert wird.

Das aus der Mischvorrichtung austretende Gemisch aus Biodiesel, zellulosehältigem Material und Bleicherde wird über eine Leitung 46, ein Ventil 47 und eine Leitung 48 dem Rühr- und Absetzbehälter 1 zugeführt. Lediglich bei Betriebsende oder Betriebsunterbrechungen wird das Ventil 47 umgeschaltet, um Restmengen aus der Mischvorrichtung 41 über eine Leitung 49 direkt der Presseinrichtung 14 zuzuführen.

## Patentansprüche

1. Verfahren zum Reinigen von Biodiesel, **dadurch gekennzeichnet, dass** ungereinigter Biodiesel mit zellulosehältigem Material in Kontakt gebracht wird.

2. Verfahren nach Anspruch 1, **dadurch gekennzeichnet, dass** der ungereinigte Biodiesel unter kontinuierlichem und/oder diskontinuierlichem Mischen mit dem zellulosehältigen Material in Kontakt gebracht wird.

3. Verfahren nach Anspruch 1 oder 2, **dadurch gekennzeichnet, dass** das zellulosehältige Material Holzspäne und/oder Holzstaub aufweist.

4. Verfahren nach einem der Ansprüche 1 bis 3, **dadurch gekennzeichnet, dass** als zellulosehältiges Material Buchenholz aufweist.

5. Verfahren nach einem der Ansprüche 1 bis 4, **dadurch gekennzeichnet, dass** dem zellulosehältigen Material als Adsorptionsmittel Bleicherde zugesetzt wird.

6. Verfahren nach Anspruch 5, **dadurch gekennzeichnet, dass** dem Biodiesel Holzspäne in einem Ausmaß von 0,1 bis 2,5 Gew.-%, Holzstaub in einem Ausmaß von 0,1 bis 3,0 Gew.-% sowie Bleicherde in einem Ausmaß von 0,05 bis 1,0 Gew.-% bezogen auf die ungereinigte Biodieselmenge zugesetzt werden.

7. Verfahren nach einem der Ansprüche 1 bis 6, **dadurch gekennzeichnet, dass** der feststoffhältige Biodiesel bei einer Temperatur von etwa 60°C gemischt wird.

8. Verfahren nach einem der Ansprüche 1 bis 7, **dadurch gekennzeichnet, dass** sich zellulosehältiges Material und gegebenenfalls Bleicherde in einem Rühr- und Absetzbehälter (1) absetzen.

9. Verfahren nach einem der Ansprüche 1 bis 7, **dadurch gekennzeichnet, dass** der Biodiesel anschließend einer weiteren Trennung vom zellulosehältigen Material sowie gegebenenfalls Bleicherde unterworfen wird.

10. Verfahren nach einem der Ansprüche 1 bis 9, **dadurch gekennzeichnet, dass** das zellulosehältige Material sowie gegebenenfalls die Bleicherde aus dem Reinigungsverfahren abgezogen und einer Presseinrichtung zugeführt werden, worauf die flüssige Pressfraktion in den Kreislauf des Verfahrens rückgeführt wird.

11. Verfahren nach Anspruch 10, **dadurch gekennzeichnet, dass** die feste Pressfraktion als lose Schüttung aus dem Verfahren abgezogen werden.

12. Verfahren nach Anspruch 11, **dadurch gekennzeichnet, dass** die feste Pressfraktion mit weiteren Feststoffen, wie Presskuchen aus Raps, Soja oder Sonnenblumen oder Holzabfällen gemischt werden.

13. Verfahren nach Anspruch 10 oder 12, **dadurch gekennzeichnet, dass** die feste Pressfraktion einer Press- oder Pelletiereinrichtung zugeführt werden.

14. Brennmaterial, hergestellt durch ein Reinigungsverfahren nach einem der Ansprüche 11 bis 13.

15. Brennmaterial nach Anspruch 14, **dadurch gekennzeichnet, dass** das Brennmaterial in Form von Pellets vorliegt.

16. Anlage zum Durchführen des Verfahrens nach einem der Ansprüche 1 - 13, **gekennzeichnet durch** einen Rühr- und Absetzbehälter (1) mit einer Leitung (4,5) zum Zuführen von gereinigtem Biodiesel in den Rühr- und Absetzbehälter (1) sowie einer Fördereinrichtung (6) zum Zuführen von zellulosehältigem Material in den Rühr- und Absetzbehälter (1), einen Antrieb (51) für ein Rührwerk (50) im Rühr- und Absetzbehälter (1), eine Leitung (16, 20) zu wenigstens einem Ruhe- und Absetzbehälter (2, 3) sowie ein Ventil (13) im Bereich des Bodens des Rühr- und Absetzbehälters (1), über welches Feststoffe aus diesem abgeführt werden können.

17. Anlage nach Anspruch 16, **dadurch gekennzeichnet, dass** in der Leitung (16, 20) zum Ruhe- und Absetzbehälter (2,3) ein Ventil (17) eingebaut ist über welches Biodiesel über eine Leitung (18) in den Rühr- und Absetzbehälter (1) zurück-geführt werden kann.

18. Anlage nach Anspruch 16 oder 17, **dadurch gekennzeichnet, dass** im Bereich des Bodens des Ruhe- und Absetzbehälters (2, 3) ein Ventil (31, 32) vorgesehen ist, das über eine Leitung (33, 34) mit dem Rühr- und Absetzbehälter (1) verbunden ist.

19. Anlage nach einem der Ansprüche 16 bis 18, **gekennzeichnet durch** eine Mischvorrichtung (41), welcher über die Leitung (4) und ein Ventil (42) sowie eine Leitung (43) zu reinigender Biodiesel und über die Fördereinrichtung (6), ein Ventil (44) und eine Leitung (45) zellulosehältiges Material zugeführt wird sowie **durch** eine Leitung (46, 48) über welche das aus der Mischvorrichtung (41) austretende Gemisch aus Biodiesel und zellulosehältigem Material dem Rühr- und Absetzbehälter (1) zugeführt wird.

20. Anlage nach einem der Ansprüche 16 bis 18, **dadurch gekennzeichnet, dass** das Ventil (13)im Bereich des Bodens des Rühr- und Absetzbehälters (1) mit einer Pressvorrichtung (14) verbunden ist und dass die Pressvorrichtung (14) über eine Leitung (36) für ausgepressten Biodiesel mit dem Rühr- und Absetzbehälter (1) verbunden ist.

21. Anlage nach Anspruch 20, **dadurch gekennzeichnet, dass** die Pressvorrichtung (14) über einen Pufferbehälter (52) mit einer Press- oder Pelletiereinrichtung (53) verbunden ist.
